# EUROPEAN PATENT APPLICATION

(11) **EP 2 312 822 A1**
(43) Date of publication of application: **20.04.2011**
(21) Application number: 09809257.0
(22) Date of filing: 28.08.2009
(51) Int. Cl.: H04M 13/00

(54) **SYSTEM AND METHOD FOR CODE STREAM TRANSFORM, CODE STREAM IDENTIFICATION UNIT AND SCHEME CONFIRMATION UNIT**

(30) Priority: 29.08.2008 CN 200810119459
(71) Applicant: HUAWEI DEVICE CO., LTD, Shenzhen, Guangdong 518129 (CN)
(72) Inventor: ZHAO, Song, Shenzhen Guangdong 518129 (CN); LIU, Yuan, Shenzhen Guangdong 518129 (CN); WANG, Jing, Shenzhen Guangdong 518129 (CN); SU, Honghong, Shenzhen Guangdong 518129 (CN); LI, Kai, Shenzhen Guangdong 518129 (CN)
(74) Representative: Körber, Martin Hans
(86) International application number: PCT/CN2009/073612
(87) International publication number: WO 2010/022672

(57) **Abstract**

A code stream conversion system and method, a code stream identifying unit and a solution determining unit are provided. The code stream conversion method includes: receiving an original code stream format obtained by parsing an original code stream; and determining a transcoding solution according to a target code stream format and the original code stream format, and using the original code stream format to decode the original code stream and using the target code stream format to encode a decoded code stream according to the transcoding solution, thus completing code stream conversion, and obtaining a target code stream corresponding to the target code stream format. Through the code stream conversion system and method, the original code stream is parsed and the transcoding solution is determined, thus achieving mutual conversion between a three-dimensional video code stream and a planar video code stream.

## Description

This application claims priority to Chinese Patent Application No. 200810119459.8, filed with the Chinese Patent Office on August 29, 2008 and entitled "CODE STREAM CONVERSION SYSTEM AND METHOD, CODE STREAM IDENTIFYING UNIT AND SOLUTION DETERMINING UNIT", which is incorporated herein by reference in its entirety.

### FIELD OF THE INVENTION

The present invention relates to the field of video technologies, and in particular, to a code stream conversion system and method, a code stream identifying unit and a solution determining unit.

### BACKGROUND OF THE INVENTION

In recent years, with the development of three-dimensional video technologies, related international standards are being discussed and established, in which, an extended feature of three-dimensional video technologies, that is, H.264/Scalable Video Coding (SVC), may provide videos of different qualities, and H.264/Multi Video Coding (MVC) that will be completed soon will provide a compression standard for multi-viewpoint videos. With the popularization of digital video applications, it becomes more and more urgent to use different coding standards for a video data format according to different application environments. Many real-time applications generally require dynamic real-time conversion of the video data between various coding formats. For example, conversion between a three-dimensional video and a conventional planar video will also become a focus of requirements. The technology of converting one coding format into another coding format is a video transcoding technology, and the device executing the video transcoding operation is a video transcoder. The video transcoding involves two aspects of meanings: according to a first aspect, conversion is performed in the same video coding standard, such as conversion between different bit rates or different resolutions; according to a second aspect, conversion is performed between different video compression standards, that is, video data compressed using one standard is converted into video data of another video compression standard.

The basic principle of the video transcoding technology is the best compromise between the quality and complexity of code stream conversion in the case that the environment and the process capability are restricted, and the key is to multiplex compressed data in the compressed video code stream, thus avoiding complex operation caused by recoding. With the gradual development of three-dimensional video technologies and standards, conversion between the three-dimensional video and the planar video will definitely become an important technology in the application field. Many existing transcoding technologies perform conversion between common planar videos, such as conversion between a Motion Picture Experts Group (MPEG)-2 code stream and an MPEG-4 code stream, and conversion between the MPEG-4 and H.263 or H.264, and these technologies desirably solve the conversion problem between the planar video compression standards. However, the existing video transcoding technologies fail to achieve conversion between the three-dimensional video and the planar video.

### SUMMARY OF THE INVENTION

The present invention is directed to a code stream conversion system and method, a code stream identifying unit and a solution determining unit, so as to achieve automatic conversion between a three-dimensional video and a planar video, thus achieving conversion between a three-dimensional video code stream and a common planar code stream.

An embodiment of the present invention provides a code stream conversion system, where the system includes:
a code stream identifying unit, configured to parse a read original code stream to be converted, so as to obtain an original code stream format corresponding to the original code stream;
a solution determining unit, configured to determine a transcoding solution according to a target code stream format and the original code stream format obtained by parsing; and
a calculation unit, configured to use the original code stream format to decode the original code stream and use the target code stream format to encode a decoded code stream according to the transcoding solution, thus completing code stream conversion, and obtaining a target code stream corresponding to the target code stream format.

In the code stream conversion system, the code stream identifying unit parses the original code stream, and the solution determining unit determines the transcoding solution according to the target code stream format and the code stream format obtained by parsing, thus achieving conversion between a three-dimensional video code stream and a planar video code stream.

An embodiment of the present invention provides a code stream identifying unit, where the code stream identifying unit includes:
a reading module, configured to read an original code stream to be converted, where the original code stream includes a three-dimensional video code stream; and
a parsing module, configured to parse the original code stream to obtain an original code stream format corresponding to the original code stream.

With the code stream identifying unit, the original code stream is parsed to obtain the original code stream format corresponding to the original code stream, thus preparing for selection of a transcoding solution to achieve mutual conversion between a three-dimensional video code stream and a planar video code stream.

An embodiment of the present invention provides a solution determining unit, where the solution determining unit includes:
a receiving module, configured to receive an original code stream format obtained by parsing an original code stream; and
a determining module, configured to determine a transcoding solution according to a target code stream format and the original code stream format.

With the solution determining unit, the transcoding solution is determined according to the original code stream format obtained by parsing and the target code stream format, thus achieving mutual conversion between a three-dimensional video code stream and a planar video code stream according to the transcoding solution.

An embodiment of the present invention further provides a code stream conversion method, where the method includes:
receiving an original code stream format obtained by parsing an original code stream; and
determining a transcoding solution according to a target code stream format and the original code stream format, and using the original code stream format to decode the original code stream and using the target code stream format to encode a decoded code stream according to the transcoding solution, thus completing code stream conversion, and obtaining a target code stream corresponding to the target code stream format.
Through the code stream conversion method, the transcoding solution is determined according to the original code stream format obtained by parsing and the target code stream format, thus achieving mutual conversion between a three-dimensional video code stream and a planar video code stream.

The technical solutions of the present invention are further described in detail in the following with reference to the accompanying drawings and embodiments.

### BRIEF DESCRIPTION OF THE DRAWINGS

FIG. 1 is a schematic structural view of a code stream conversion system according to an embodiment of the present invention;
FIG. 2 is a schematic structural view of a code stream identifying unit according to an embodiment of the present invention;
FIG. 3 is a schematic structural view of a solution determining unit according to an embodiment of the present invention;
FIG. 4 is a flow chart of a code stream conversion method according to a first embodiment of the present invention;
FIG. 5 is a flow chart of a code stream conversion method according to a second embodiment of the present invention;
FIG. 6 is a flow chart of a code stream conversion method according to a third embodiment of the present invention;
FIG. 7 is a flow chart of a code stream conversion method according to a fourth embodiment of the present invention;
FIG. 8 is a flow chart of a code stream conversion method according to a fifth embodiment of the present invention;
FIG. 9 is a flow chart of a code stream conversion method according to a sixth embodiment of the present invention;
FIG. 10 is a flow chart of a code stream conversion method according to a seventh embodiment of the present invention;
FIG. 11 is a flow chart of a code stream conversion method according to an eighth embodiment of the present invention;
FIG. 12 is a flow chart of a code stream conversion method according to a ninth embodiment of the present invention; and
FIG. 13 is a flow chart of a code stream conversion method according to a tenth embodiment of the present invention.

### DETAILED DESCRIPTION OF THE EMBODIMENTS

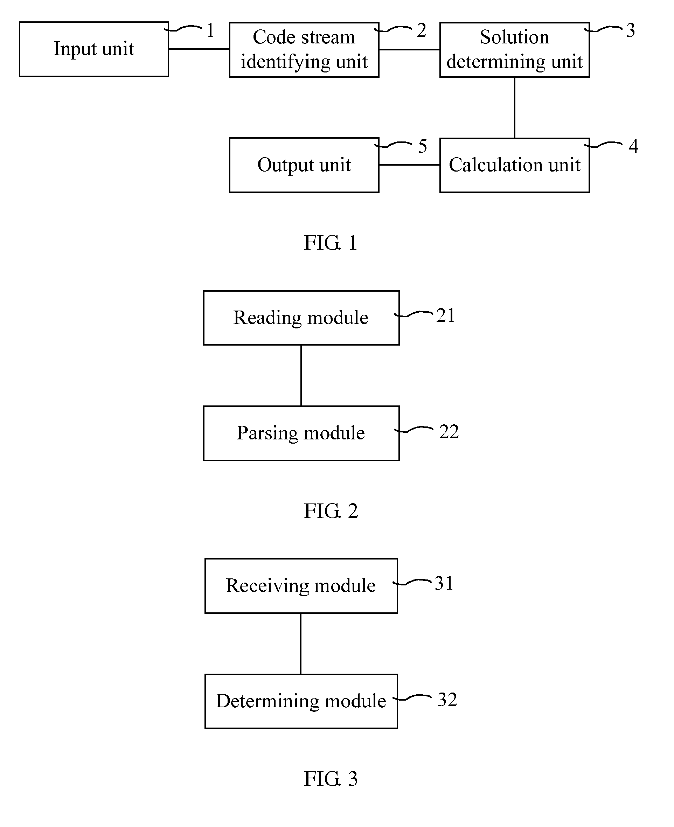

FIG. 1 is a schematic structural view of a code stream conversion system according to an embodiment of the present invention. Referring to FIG. 1, the system includes: a code stream identifying unit 2, configured to parse a read original code stream to be converted, so as to obtain an original code stream format corresponding to the original code stream; a solution determining unit 3, configured to determine a transcoding solution according to a target code stream format and the original code stream format obtained by parsing; and a calculation unit 4, configured to use the original code stream format to decode the original code stream and use the target code stream format to encode a decoded code stream according to the transcoding solution, thus completing code stream conversion, and obtaining a target code stream corresponding to the target code stream format. When the original code stream format is a planar video code stream format, the target code stream format is a three-dimensional video code stream format; when the original code stream format is a three-dimensional video code stream format, the target code stream format is a planar video code stream format.

Optionally, the code stream conversion system may include: an input unit 1, configured to receive the original code stream to be converted, where the original code stream includes a three-dimensional video code stream or a planar video code stream. For example, the three-dimensional video code stream may be a binocular three-dimensional video code stream encoded according to an H.264/Advanced Video Coding (AVC) format, or a three-dimensional video code stream with a framing structure encoded according to an H.263 standard, or a three-dimensional video code stream with a framing structure encoded according to an MPEG-4 standard, and the planar video code stream may be a common H.264 code stream. In addition, the code stream conversion system may further include an output unit 5, configured to output the target code stream after the code stream conversion by the calculation unit 4.

In the above system, the input unit receives the original code stream to be converted, the code stream identifying unit parses the original code stream to obtain the original code stream format corresponding to the original code stream, the solution determining unit, based on a preset target code stream format or a target code stream format carried in a received instruction, determines the transcoding solution according to the target code stream format and the original code stream format obtained by parsing, the calculation unit completes the code stream conversion, and finally the output unit outputs a code stream obtained through conversion, thus desirably achieving mutual conversion between a three-dimensional video code stream and a planar video code stream.

FIG. 2 is a schematic structural view of a code stream identifying unit according to an embodiment of the present invention. Referring to FIG. 2, the code stream identifying unit includes: a reading module 21, configured to read an original code stream to be converted, where the original code stream includes a three-dimensional video code stream or a planar video code stream; and a parsing module 22, configured to parse the original code stream to obtain an original code stream format corresponding to the original code stream.

When the original code stream is a three-dimensional video code stream, the reading module 21 may read the three-dimensional video code stream to be converted; when the original code stream is a planar video code stream, the reading module 21 may read the planar video code stream to be converted. The parsing module 22 is configured to parse the read code stream, thus obtaining the original code stream format corresponding to the original code stream.

In the above-mentioned code stream identifying unit, the original code stream is parsed to obtain the original code stream format corresponding to the original code stream, thus preparing for selection of a transcoding solution to achieve mutual conversion between the three-dimensional video code stream and the planar video code stream.

FIG. 3 is a schematic structural view of a solution determining unit according to an embodiment of the present invention. Referring to FIG. 3, the solution determining unit includes: a receiving module 31, configured to receive an original code stream format obtained by parsing an original code stream; and a determining module 32, configured to determine a transcoding solution according to a target code stream format and the original code stream format obtained by parsing. The target code stream format may be preset, or may also be obtained from received signaling.

When the original code stream format is a planar video code stream format, the target code stream format is a three-dimensional video code stream format; when the original code stream format is a three-dimensional video code stream format, the target code stream format is a planar video code stream format. Correspondingly, the transcoding solution may include: When the original code stream is a three-dimensional video code stream and the target code stream is a planar video code stream, the determining module 32 determines the transcoding solution according to the three-dimensional video code stream format obtained by parsing the original code stream and the planar video code stream format; when the original code stream is a planar video code stream and the target code stream is a three-dimensional video code stream, the determining module 32 determines the transcoding solution according to the planar video code stream format obtained by parsing the original code stream and the three-dimensional video code stream format.

With the above solution determining unit, the transcoding solution is determined according to the target code stream format and the original code stream format obtained by parsing the original code stream, thus achieving mutual conversion between the three-dimensional video code stream and the planar video code stream according to the transcoding solution.

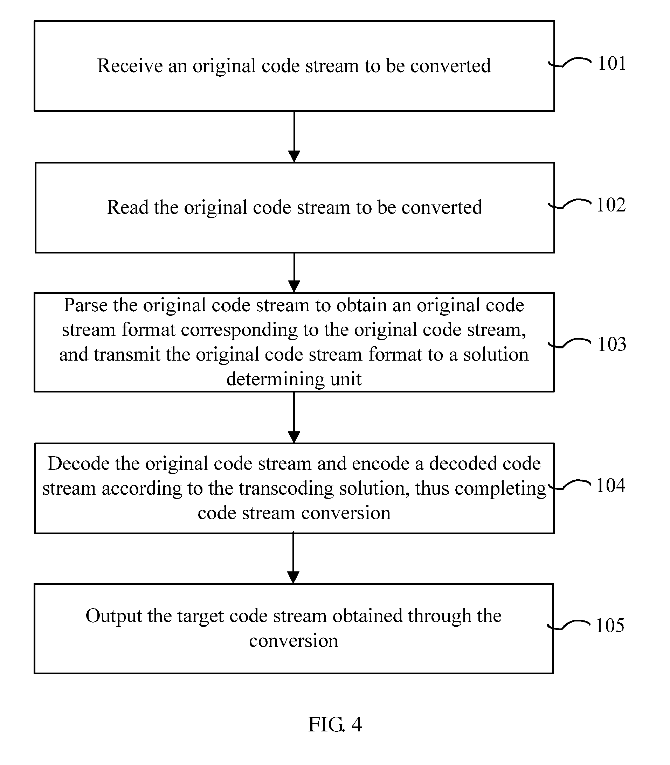

FIG. 4 is a flow chart of a code stream conversion method according to a first embodiment f the present invention. Referring to FIG. 4, the method includes the following steps.

In step 101, an original code stream to be converted is received.

This step is optional, an input unit receives the original code stream to be converted, and the original code stream herein may include a three-dimensional video code stream and a planar video code stream.

For example, the three-dimensional video code stream may be a binocular three-dimensional video code stream encoded according to an H.264/AVC format, or a three-dimensional video code stream with a framing structure encoded according to an H.263 standard, or a three-dimensional video code stream with a framing structure encoded according to an MPEG-4 standard, and the planar video code stream may be a common H.264 code stream.

In step 102, the original code stream to be converted is read.

The original code stream to be converted is read through a code stream identifying unit.

In step 103, the original code stream is parsed to obtain an original code stream format corresponding to the original code stream, and the original code stream format is transmitted to a solution determining unit, so that the solution determining unit determines a transcoding solution according to a target code stream format and the original code stream format obtained by parsing the original code stream.

The code stream identifying unit may parse the original code stream to obtain the original code stream format corresponding to the original code stream, and transmit the original code stream format to the solution determining unit, so that the solution determining unit determines the transcoding solution according to the target code stream format and the code stream format obtained by parsing the original code stream. This step includes: When the original code stream is a three-dimensional video code stream and the target code stream is a planar video code stream, the three-dimensional video code stream is parsed to obtain a three-dimensional video code stream format corresponding to the three-dimensional video code stream, and the transcoding solution is determined according to the three-dimensional video code stream format obtained by parsing the three-dimensional video code stream and the planar video code stream format of the target code stream; when the original code stream is a planar video code stream and the target code stream is a three-dimensional video code stream, the planar video code stream is parsed to obtain a planar video code stream format corresponding to the planar video code stream, and the transcoding solution is determined according to the planar video code stream format obtained by parsing the planar video code stream and the three-dimensional video code stream format of the target code stream. The three-dimensional video code stream may be a basic code stream and parallax information, and the planar video code stream format may be the basic code stream; the three-dimensional video code stream format may also be a frame formed by the basic code stream and the parallax information, and the planar video code stream format may also be the basic code stream; or the planar video code stream format may further be the basic code stream, and the three-dimensional video code stream format may further be a new video frame formed by interlacing left channel video frame and right channel video frame. The three cases are merely examples for the planar video code stream format and the three-dimensional video code stream format, but the present invention is not limited to the three cases.

In step 104, the original code stream is decoded and the decoded code stream is encoded according to the transcoding solution, thus completing code stream conversion.

This step is optional. A calculation unit uses the original code stream format to decode the original code stream and uses the target code stream format to encode the decoded code stream according to the transcoding solution, thus completing the code stream conversion, and obtaining a target code stream corresponding to the target code stream format.

In step 105, the target code stream obtained through conversion is output.

This step is optional. An output unit outputs the target code stream obtained through conversion.

In the above code stream conversion method, the original code stream is parsed to obtain the original code stream format corresponding to the original code stream, and the transcoding solution is determined according to the target code stream format and the original code stream format of the original code stream, thus achieving mutual conversion between the three-dimensional video code stream and the planar video code stream.

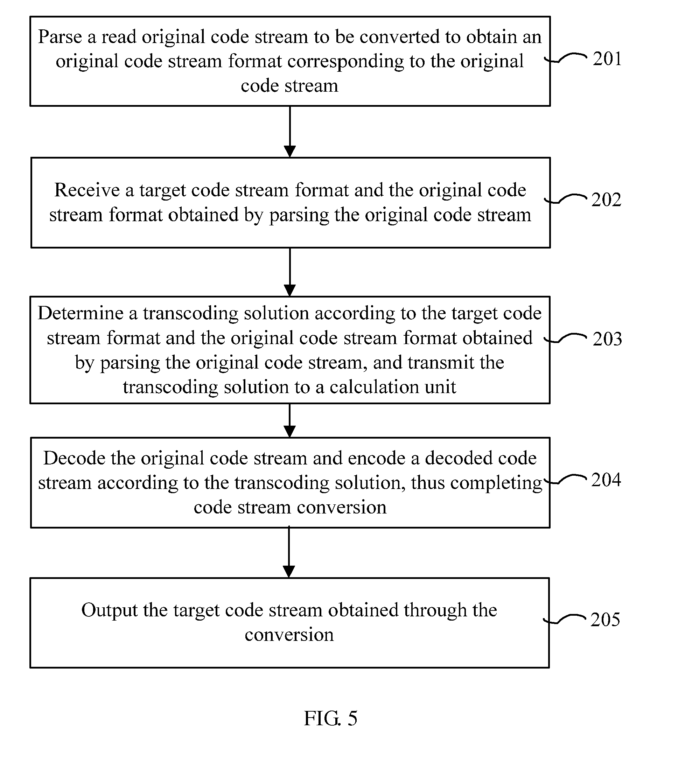

FIG. 5 is a flow chart of a code stream conversion method according to a second embodiment of the present invention. Referring to FIG. 5, the method includes the following steps.

In step 201, a read original code stream to be converted is parsed to obtain an original code stream format corresponding to the original code stream.

This step is optional. First, an input unit receives the original code stream to be converted, and then a code stream identifying unit reads the original code stream, and parses the original code stream to obtain the original code stream format corresponding to the original code stream.

In step 202, a target code stream format and the original code stream format obtained by parsing the original code stream are received.

A solution determining unit may receive the target code stream format carried in signaling and the original code stream format obtained by parsing the original code stream, where the target code stream format may also be preset in the solution determining unit.

In step 203, a transcoding solution is determined according to the target code stream format and the original code stream format obtained by parsing the original code stream, and the transcoding solution is transmitted to a calculation unit.

The solution determining unit determines the transcoding solution according to the target code stream format and the original code stream format obtained by parsing the original code stream. This step may include: When the original code stream is a three-dimensional video code stream and the target code stream is a planar video code stream, the three-dimensional video code stream is parsed to obtain a three-dimensional video code stream format corresponding to the three-dimensional video code stream, and the transcoding solution is determined according to the three-dimensional video code stream format obtained by parsing the three-dimensional video code stream and the planar video code stream format of the target code stream; when the original code stream is a planar video code stream and the target code stream is a three-dimensional video code stream, the planar video code stream is parsed to obtain a planar video code stream format corresponding to the planar video code stream, and the transcoding solution is determined according to the planar video code stream format obtained by parsing the planar video code stream and the three-dimensional video code stream format of the target code stream. The transcoding solution is transmitted to the calculation unit.

In step 204, the original code stream is decoded and the decoded code stream is encoded according to the transcoding solution, thus completing code stream conversion.

This step is optional. The calculation unit uses the original code stream format to decode the original code stream and uses the target code stream format to encode a decoded code stream according to the transcoding solution, thus completing the code stream conversion, and obtaining a target code stream corresponding to the target code stream format.

In step 205, the target code stream obtained through conversion is output.

This step is optional. An output unit outputs the code stream obtained through conversion.

In the above code stream conversion method, the original code stream format corresponding to the original code stream is obtained by parsing, and the transcoding solution is determined according to the target code stream format and the original code stream format of the original code stream, thus achieving mutual conversion between the three-dimensional video code stream and the planar video code stream.

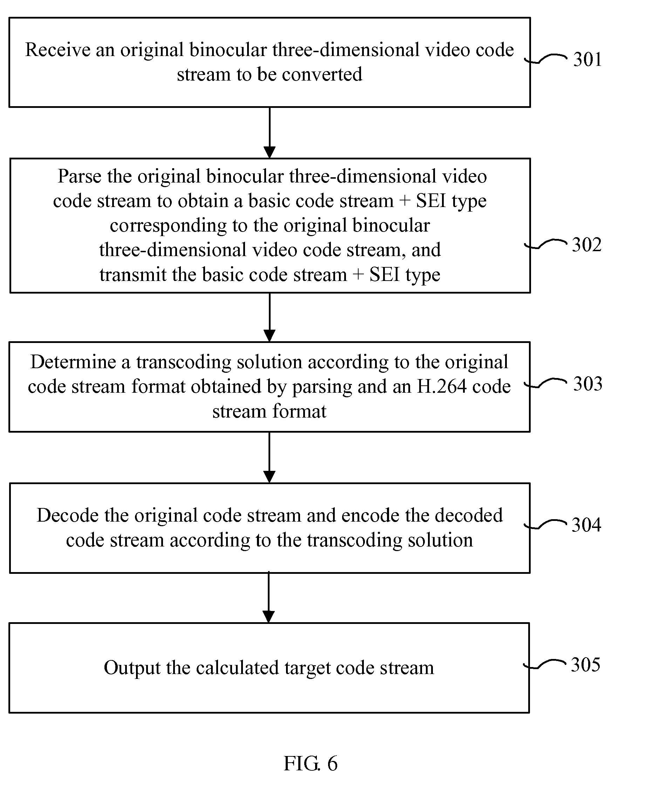

FIG. 6 is a flow chart of a code stream conversion method according to a third embodiment of the present invention. Referring to FIG. 6, in this embodiment, a binocular three-dimensional video code stream encoded according to an H.264/AVC format is converted to a common H.264 code stream, where the binocular three-dimensional video code stream includes the following two parts of video data: left channel planar video data and depth/parallax information of right channel video data relative to the left channel video data. The depth/parallax information may be obtained through three-dimensional matching between the left channel video frame and right channel video frame or is directly captured through a depth camera. The binocular three-dimensional video code stream is formed by a basic code stream and Supplemental Enhancement Information (SEI) information added before each frame of the basic code stream. The basic code stream is encoded using the left channel video data as common video data according to the H.264/AVC standard. Parallax information corresponding to each video frame of the basic code stream is encoded into the SEI in the H.264 according to a common gray-scale image frame. The method includes the following steps.

In step 301, an original binocular three-dimensional video code stream to be converted is received.

An input unit receives the original binocular three-dimensional video code stream to be converted.

In step 302, the original binocular three-dimensional video code stream is parsed to obtain a basic code stream + SEI type corresponding to the original binocular three-dimensional video code stream, and the basic code stream + SEI type is transmitted.

A code stream identifying unit reads, from the input unit, the input original binocular three-dimensional video code stream, parses the original binocular three-dimensional video code stream to obtain an original code stream format, that is, the basic code stream + SEI type, and transmits the original code stream format of the original binocular three-dimensional video code stream obtained by parsing, to a solution determining unit.

In step 303, a transcoding solution is determined according to the original code stream format obtained by parsing and an H.264 code stream format.

The solution determining unit reads two inputs of the unit, namely, the original code stream format (basic code stream + SEI) and a target code stream (basic code stream), and determines a transcoding solution of directly removing the SEI information in the code stream and modifying a part of parameters at the same time.

In step 304, the original code stream is decoded and a decoded code stream is encoded according to the transcoding solution.

According to the transcoding solution determined by the transcoding solution selecting unit, the calculation unit reads a code stream data packet in an input data unit, and determines whether the current data packet is SEI information, and directly discards the current data packet if the current data packet is SEI information, or directly outputs the current data packet through an output data unit without any processing if the current data packet is not SEI information.

In step 305, the calculated target code stream is output.

The output unit obtains, from the calculation unit, the target code stream without the SEI information, and then directly outputs the target code stream.

Through the above code stream conversion method, the three-dimensional video code stream containing the basic code stream and the parallax information can be desirably converted into the planar video code stream containing the basic code stream.

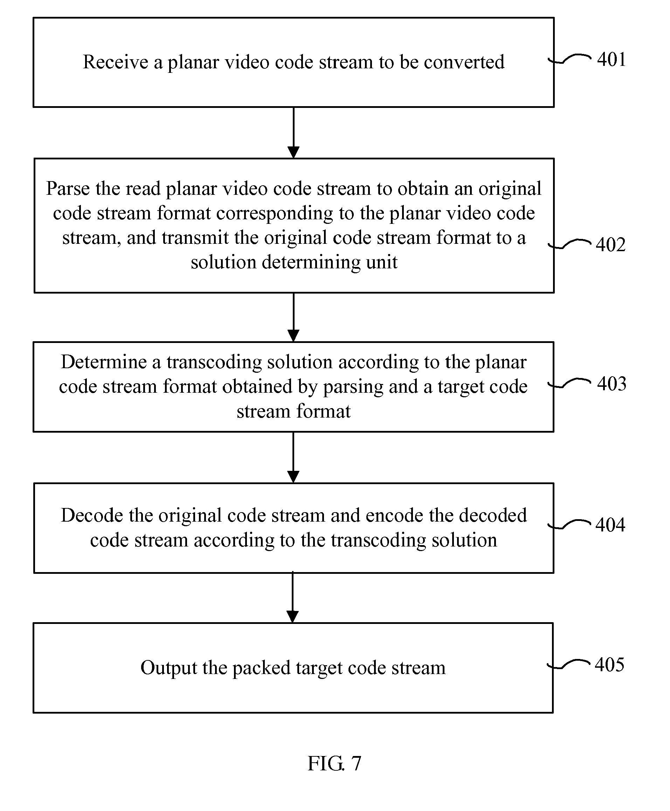

Corresponding to the code stream conversion method according to the third embodiment of the present invention, the planar video code stream may be converted into the three-dimensional video code stream. FIG. 7 is a flow chart of a code stream conversion method according to a fourth embodiment of the present invention. Referring to FIG. 7, when an input original code stream to be converted is a common H.264/AVC code stream, and a target code stream is a binocular three-dimensional video code stream, it is required to encode the original code stream according to an H.264/AVC standard and encode depth/ parallax information into SEI information according to a common gray-scale image. The method includes the following steps.

In step 401, a planar video code stream to be converted is received.

An input unit receives a part of the original video code stream with a common H.264/AVC format to be converted.

In step 402, the read planar video code stream is parsed to obtain an original code stream format corresponding to the planar video code stream, and the original code stream format is transmitted to a solution determining unit.

A code stream identifying unit reads, from the input unit, the input original code stream, parses the original code stream to obtain the H.264/AVC format, and transmits an original code stream format obtained by parsing, to the solution determining unit.

In step 403, a transcoding solution is determined according to the planar code stream format obtained by parsing and a target code stream format.

The target code stream format is a three-dimensional video code stream format, and the solution determining unit reads two inputs of the unit, namely, the planar code stream format (H.264/AVC format) and the three-dimensional video code stream format (basic code stream + SEI), and determines a transcoding solution of parsing a video frame of the planar code stream, performing region segmentation, obtaining depth information, and then encoding the depth information into the SEI information according to a common gray-scale image and adding the SEI information into the code stream.

The process of obtaining the depth information may include the following steps.

First, image segmentation is performed on the planar code stream to obtain video objects, where the segmentation may be content-based segmentation, or may be foreground and background segmentation; and then different video objects obtained through the segmentation are assigned with different depth information, where the depth information may be set by a system by default or may be designated, and thus the depth information corresponding to the planar code stream may be obtained.

In step 404, the original code stream is decoded and the decoded code stream is encoded according to the transcoding solution.

According to the transcoding solution determined by the solution determining unit, a calculation unit reads a code stream data packet in the input unit, obtains a video frame through parsing, performs region segmentation, and adds depth information, where the depth information is encoded into the SEI information and is packed as a Network Abstraction Layer (NAL) structure.

In step 405, the packed target code stream is output.

An output unit obtains the packed target code stream from the calculation unit, and then directly outputs the packed target code stream.

Through the above code stream conversion method, the planar video code stream containing the basic code stream can be desirably converted into the three-dimensional video code stream containing the basic code stream and the parallax information.

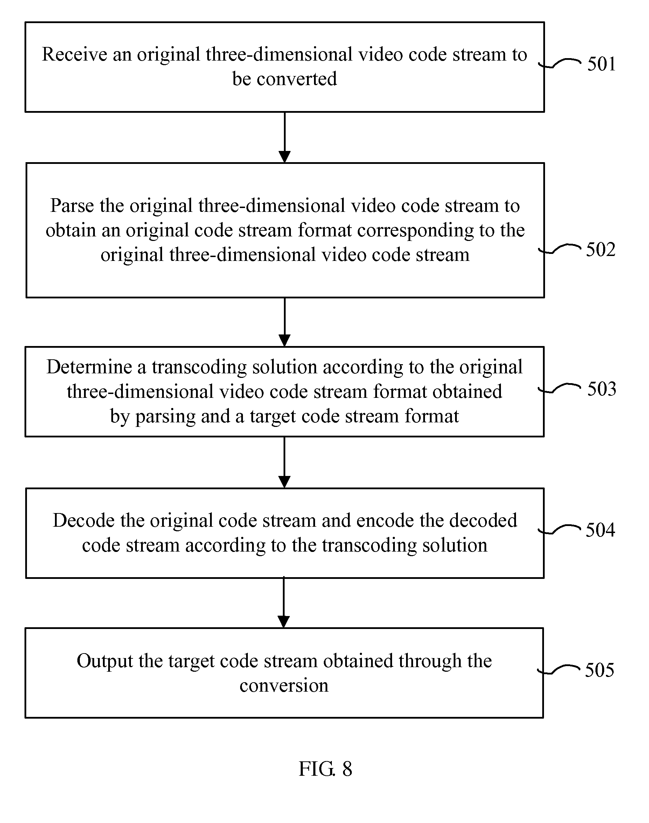

FIG. 8 is a flow chart of a code stream conversion method according to a fifth embodiment of the present invention. Referring to FIG. 8, in this embodiment, the original code stream is a three-dimensional video code stream, the target code stream is a common planar code stream, and the three-dimensional video code stream format is an H.264 format, where a left channel video frame and the corresponding depth/parallax information are assembled to form a large frame and the frame is encoded according an H.264/AVC standard, and the common planar video is a basic H.264/AVC code stream only containing left channel data. The method includes the following steps.

In step 501, an original three-dimensional video code stream to be converted is received.

An input unit receives a part of the original three-dimensional video code stream to be converted.

In step 502, the original three-dimensional video code stream is parsed to obtain an original code stream format corresponding to the original three-dimensional video code stream.

A code stream identifying unit reads, from the input unit, the original three-dimensional video code stream to be converted, and parses the code stream to obtain a code stream structure in which each frame contains the left channel video frame and the corresponding parallax information, and the left channel video frame and the parallax information are organized according to different slices.

In step 503, a transcoding solution is determined according to the original three-dimensional video code stream format obtained by parsing and a target code stream format.

A solution determining unit obtains, from the code stream identifying unit, the original code stream format, and determines a transcoding solution, that is, as for each slice of each video frame in the original code stream, if the video frame corresponding to the slice is the left channel video frame, the video frame corresponding to the slice is directly put into an output data interface without any processing; and if the video frame corresponding to the slice corresponds to the depth/parallax information, the video frame corresponding to the slice is directly discarded.

In step 504, the original code stream is decoded and the decoded code stream is encoded according to the transcoding solution.

A calculation unit parses the slice number of NAL of each video frame in the code stream according to the transcoding solution determined by the solution determining unit, and if the slice number is corresponding to the left channel video frame, it is directly put into an output unit without any processing; and if the slice number is corresponding to the depth/parallax information, it is directly discarded.

In step 505, the target code stream obtained through conversion is output.

The output unit directly outputs the target code stream obtained through conversion.

Through the above code stream conversion method, the three-dimensional video code stream containing a data frame formed by assembling the basic code stream and the parallax information can be desirably converted into the planar video code stream containing the basic code stream.

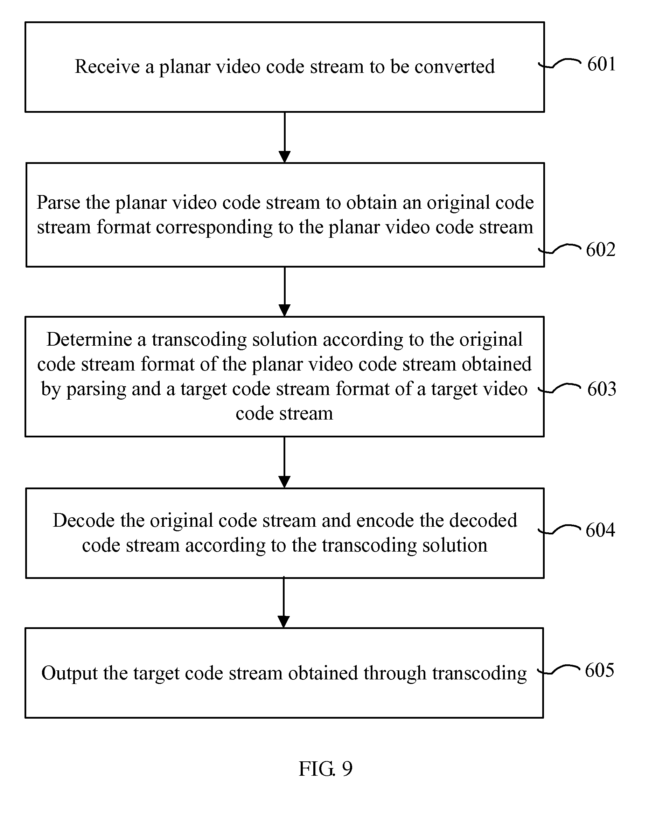

Corresponding to the code stream conversion method according to a fifth embodiment of the present invention, the planar video code stream may be converted into the three-dimensional video code stream. FIG. 9 is a flow chart of a code stream conversion method according to a sixth embodiment of the present invention. Referring to FIG. 9, in this embodiment, a code stream to be converted is a common planar code stream, and a target code stream is a three-dimensional video code stream with a framing structure encoded according to an H.264/AVC standard. The method includes the following steps.

In step 601, a planar video code stream to be converted is received.

An input unit receives a part of the planar video code stream to be converted.

In step 602, the planar video code stream is parsed to obtain an original code stream format corresponding to the planar video code stream.

A code stream identifying unit reads, from the input unit, an original common planar video code stream to be converted and which is encoded according to the H.264/AVC standard, and parses the code stream to obtain the original code stream format.

In step 603, a transcoding solution is determined according to the original code stream format of the planar video code stream obtained by parsing and a target code stream format of a target video code stream.

A solution determining unit obtains, from the code stream identifying unit, the planar video code stream format obtained by parsing, and determines a transcoding solution for each video frame of the planar video code stream according to the planar video code stream format and the three-dimensional video code stream format.

In step 604, the original code stream is decoded and the decoded code stream is encoded according to the transcoding solution.

According to the transcoding solution determined by the solution determining unit, a calculation unit parses each video frame in the code stream, performs decoding and region segmentation, obtains depth information, and divides the depth information into new slices for encoding and packing, thus completing the code stream conversion.

The process of obtaining the depth information may include the following steps.

First, image segmentation is performed on the planar code stream to obtain video objects, where the segmentation may be content-based segmentation, or may be foreground and background segmentation; and then different video objects obtained through the segmentation are assigned with different depth information, where the depth information may be set by a system by default or may be designated, and thus the depth information corresponding to the planar code stream may be obtained.

In step 605, the target code stream obtained through transcoding is output.

An output unit directly outputs the target code stream obtained through conversion.

Through the above-mentioned code stream conversion method, the planar video code stream containing the basic code stream can be desirably converted into the three-dimensional video code stream containing a data frame formed by assembling the basic code stream and the parallax information.

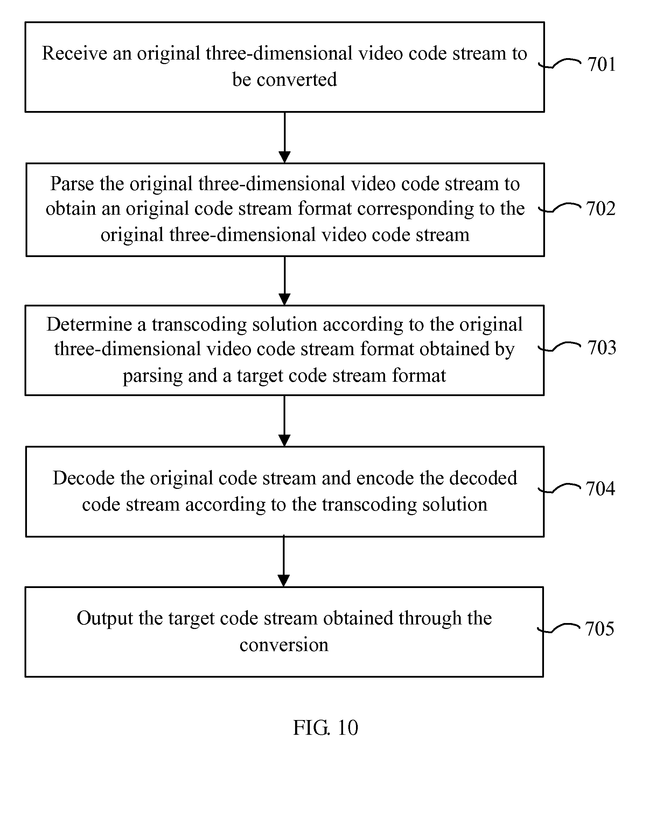

FIG. 10 is a flow chart of a code stream conversion method according to a seventh embodiment of the present invention. Referring to FIG. 10, in this embodiment, a code stream to be converted is a three-dimensional video code stream, a three-dimensional video code stream format is a binocular three-dimensional video code stream, and the structure of each frame is a new video frame formed by interlacing left channel video frame and right channel video frame; a target code stream is a common planar code stream, and the coding standard may be any known standard. The method includes the following steps.

In step 701, an original three-dimensional video code stream to be converted is received.

An input unit receives a part of the original three-dimensional video code stream to be converted.

In step 702, the original three-dimensional video code stream is parsed to obtain an original code stream format corresponding to the original three-dimensional video code stream.

A code stream identifying unit reads, from the input unit, the original three-dimensional video code stream to be converted, and then parses the code stream, and obtains that the original code stream format is an interlacing structure.

In step 703, a transcoding solution is determined according to the original three-dimensional video code stream format obtained by parsing and a target code stream format.

A solution determining unit obtains, from the code stream identifying unit, the original code stream format and the target code stream format, and determines a transcoding solution for each video frame in the original three-dimensional video code stream.

In step 704, the original code stream is decoded and the decoded code stream is encoded according to the transcoding solution.

A calculation unit decodes each video frame in the original three-dimensional video code stream according to the transcoding solution, and extracts one or more video frames of one channel for recoding.

In step 705, the target code stream obtained through conversion is output.

An output unit directly outputs the target code stream obtained through conversion.

Through the above code stream conversion method, the three-dimensional video code stream including one or more new video frames formed by interlacing the left channel video frame and the right channel video frame, is converted into the common planar video code stream.

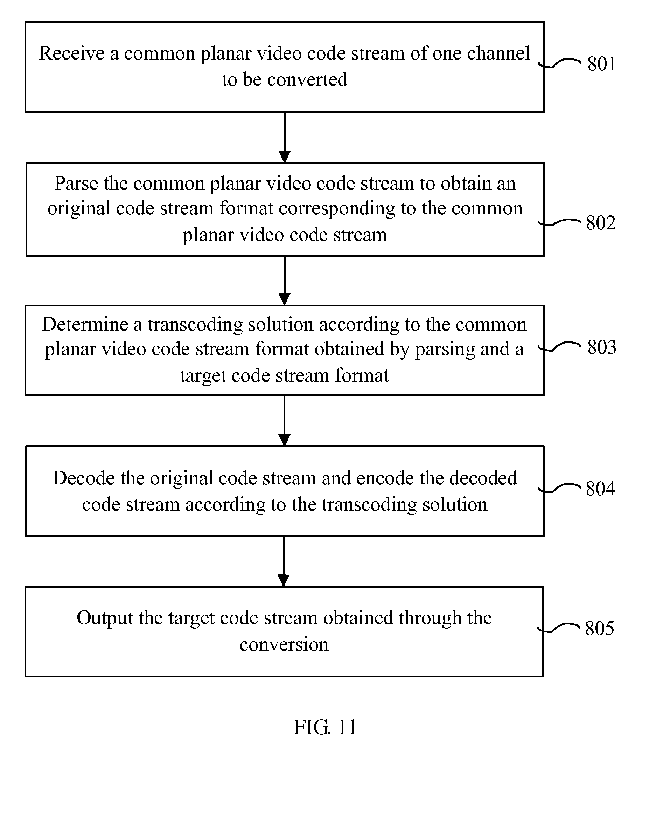

Corresponding to the code stream conversion method according to the seventh embodiment of the present invention, the planar video code stream may be converted into the three-dimensional video code stream. FIG. 11 is a flow chart of a code stream conversion method according to an eighth embodiment of the present invention. Referring to FIG. 11, in this embodiment, a code stream to be converted is a common planar video code stream, and a target code stream is a three-dimensional video code stream. The method includes the following steps.

In step 801, a common planar video code stream of one channel to be converted is received.

An input unit receives a part of the common planar video code stream of one channel to be converted.

In step 802, the common planar video code stream is parsed to obtain an original code stream format corresponding to the common planar video code stream.

A code stream identifying unit reads, from the input unit, the original common planar video code stream to be converted, and parses the code stream to obtain the original code stream format.

In step 803, a transcoding solution is determined according to the common planar video code stream format obtained by parsing and a target code stream format.

A solution determining unit determines a transcoding solution for each video frame in the original code stream according to the target code stream format and the common planar video code stream format obtained by parsing.

In step 804, the original code stream is decoded and the decoded code stream is encoded according to the transcoding solution.

According to the transcoding solution determined by the solution determining unit, a calculation unit parses each video frame in the code stream, performs region segmentation, obtains depth information, and converts the depth information into parallax information; and then, reconstructs a video frame corresponding to the other channel, forms a new video frame by interlacing, and performs encoding, thus completing the code stream conversion.

The process of obtaining the depth information may include the following steps.

First, image segmentation is performed on the planar code stream to obtain video objects, where the segmentation may be content-based segmentation, or may be foreground and background segmentation; and then different video objects obtained through the segmentation are assigned with different depth information, where the depth information may be set by a system by default or may be designated, and thus the depth information corresponding to the planar code stream may be obtained.

In step 805, the target code stream obtained through conversion is output.

An output unit directly outputs the target code stream obtained through conversion.

Through the above code stream conversion method, the common planar video code stream can be desirably converted into the three-dimensional video code stream including one or more new video frames formed by interlacing the left channel video frame and the right channel video frame.

It can be seen from the above embodiments of the code stream conversion method that, through the technical solutions of the present invention, various forms of three-dimensional video code streams may be desirably converted into planar video code streams, and correspondingly, planar video code streams may also be converted into various forms of three-dimensional video code streams.

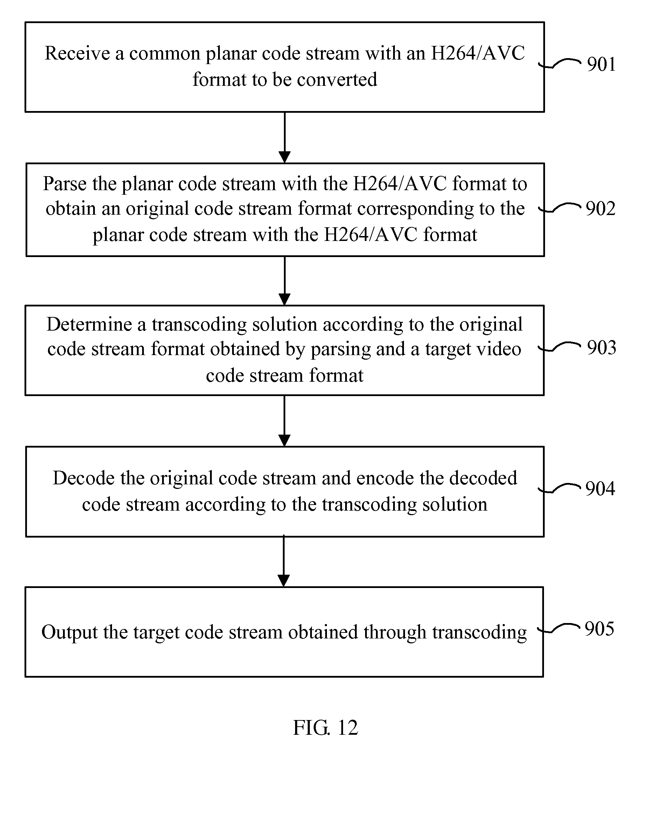

FIG. 12 is a flow chart of a code stream conversion method according to a ninth embodiment of the present invention. Referring to FIG. 12, in this embodiment, an original code stream to be converted is a common planar code stream with an H.264/AVC format, and a target code stream is a three-dimensional video code stream with a framing structure encoded according to an H.263 standard. The method includes the following steps.

In step 901, a common planar code stream to be converted with an H.264/AVC format is received.

An input unit receives a part of the common planar code stream to be converted with the H.264/AVC format.

In step 902, the planar code stream with the H.264/AVC format is parsed to obtain an original code stream format corresponding to the planar code stream with the H.264/AVC format.

A code stream identifying unit reads, from the input unit, an original common planar code stream to be converted that is encoded according to the H.264 standard, and parses the planar code stream to obtain the original code stream format.

In step 903, a transcoding solution is determined according to the original code stream format obtained by parsing and a target video code stream format.

A solution determining unit obtains, from the code stream identifying unit, the code stream structure obtained by parsing, and determines a transcoding solution for each video frame in the planar video code stream according to the planar video code stream format and the three-dimensional video code stream format.

In step 904, the original code stream is decoded and the decoded code stream is encoded according to the transcoding solution.

According to the transcoding solution determined by the solution determining unit, a calculation unit parses each video frame in the code stream, performs decoding and region segmentation, obtains depth information, and uses the depth information as an image for assembling with the decoded video frame to form a new video frame, which is then encoded and packed according to the H.263 standard. The new video frame may be formed by assembling in an interleaved manner, a side-by-side manner or other manners.

The process of obtaining the depth information may include the following steps.

First, image segmentation is performed on the planar code stream to obtain video objects, where the segmentation may be content-based segmentation, or may be foreground and background segmentation; and then different video objects obtained through the segmentation are assigned with different depth information, where the depth information may be set by a system by default or may be designated, and thus the depth information corresponding to the planar code stream may be obtained.

In step 905, the target code stream obtained through transcoding is output.

An output unit directly outputs the target code stream obtained through conversion.

Through the above code stream conversion method, the planar video code stream containing the basic code stream can be desirably converted into the three-dimensional video code stream containing a data frame formed by assembling the basic code stream and the parallax information.

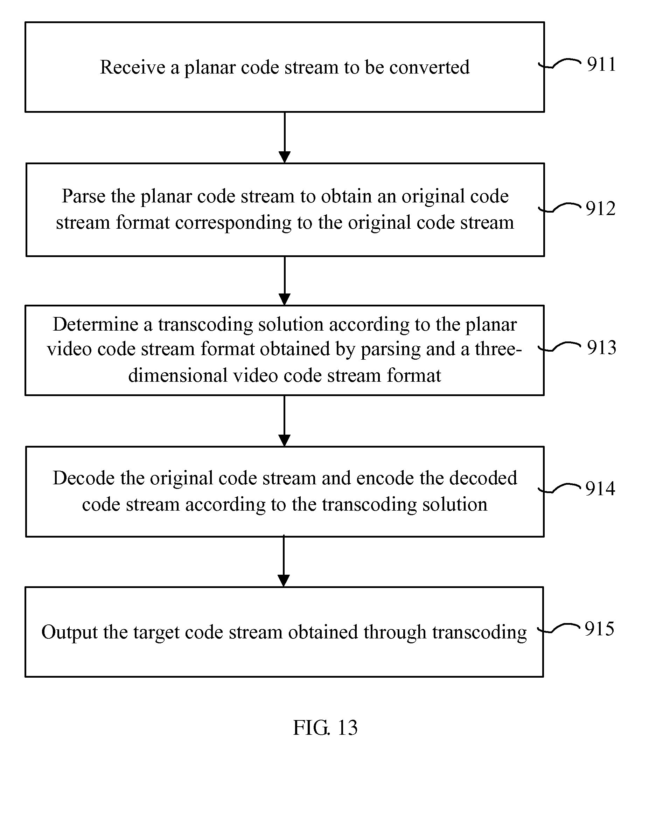

FIG. 13 is a flow chart of a code stream conversion method according to a tenth embodiment of the present invention. Referring to FIG. 13, in this embodiment, a code stream to be converted is a common planar code stream, and a target code stream is a three-dimensional video code stream with a framing structure encoded according to an MPEG-4 standard. The method includes the following steps.

In step 911, a planar code stream to be converted is received.

An input unit receives a part of the planar code stream to be converted.

In step 912, the planar code stream is parsed to obtain an original code stream format corresponding to the original code stream.

A code stream identifying unit reads, from the input unit, an original common planar video code stream to be converted that is encoded according to the H.264 standard, and parses the code stream to obtain a code stream structure.

In step 913, a transcoding solution is determined according to the planar video code stream format obtained by parsing and a three-dimensional video code stream format.

A solution determining unit obtains, from the code stream identifying unit, the planar video code stream format obtained by parsing, and determines a transcoding solution for each video frame in the planar video code stream according to the planar video code stream format and the three-dimensional video code stream format.

In step 914, the original code stream is decoded and the decoded code stream is encoded according to the transcoding solution.

According to the transcoding solution determined by the solution determining unit, a calculation unit parses each video frame in the code stream, performs decoding and region segmentation, obtains depth information, and uses the depth information as an image for assembling with the decoded video frame to form a new video frame, which is then encoded and packed according to the MPEG-4 standard. The new video frame may be formed by assembling in an interleaved manner, a side-by-side manner or other manners.

The process of obtaining the depth information may include the following steps.

First, image segmentation is performed on the planar code stream to obtain video objects, where the segmentation may be content-based segmentation, or may be foreground and background segmentation; and then different video objects obtained through the segmentation are assigned with different depth information, where the depth information may be set by a system by default or may be designated, and thus the depth information corresponding to the planar code stream may be obtained.

In step 915, the target code stream obtained through transcoding is output.

An output unit directly outputs the target code stream obtained through conversion.

Through the above code stream conversion method, the planar video code stream containing the basic code stream can be desirably converted into the three-dimensional video code stream containing a data frame formed by assembling the basic code stream and the parallax information.

Finally, it should be noted that, the above embodiments are merely provided for describing the technical solutions of the present invention, but not intended to limit the present invention. It should be understood by persons of ordinary skill in the art that although the present invention has been described in detail with reference to the embodiments, modifications can be made to the technical solutions described in the embodiments, or equivalent replacements can be made to some technical features in the technical solutions, as long as such modifications or replacements do not depart from the spirit and scope of the present invention.

## Claims

1. A code stream conversion system, comprising:
a code stream identifying unit, configured to parse a read original code stream to be converted so as to obtain an original code stream format corresponding to the original code stream;
a solution determining unit, configured to determine a transcoding solution according to a target code stream format and the original code stream format obtained by parsing; and
a calculation unit, configured to, based on the transcoding solution, decode the original code stream according to the original code stream format and encode the decoded code stream according to the target code stream format, thus completing code stream conversion,
and obtaining a target code stream corresponding to the target code stream format.

2. The code stream conversion system according to claim 1, further comprising:
an input unit, configured to receive the original code stream to be converted, wherein the original code stream comprises a three-dimensional video code stream or a planar video code stream; and
an output unit, configured to output the target code stream after the code stream conversion performed by the calculation unit.

3. A code stream identifying unit, comprising:
a reading module, configured to read an original code stream to be converted, wherein the original code stream comprises a three-dimensional video code stream; and
a parsing module, configured to parse the original code stream to obtain an original code stream format corresponding to the original code stream.

4. A solution determining unit, comprising:
a receiving module, configured to receive an original code stream format obtained by parsing an original code stream; and
a determining module, configured to determine a transcoding solution according to a target code stream format and the original code stream format.

5. A code stream conversion method, comprising:
receiving an original code stream format obtained by parsing an original code stream; and
determining a transcoding solution according to a target code stream format and the original code stream format, and using the original code stream format to decode the original code stream and using the target code stream format to encode a decoded code stream according to the transcoding solution, thus completing code stream conversion, and
obtaining a target code stream corresponding to the target code stream format.

6. The code stream conversion method according to claim 5, wherein
when the original code stream format is a planar video code stream format, the target code stream format is a three-dimensional code stream format; when the original code stream format is a three-dimensional video code stream format, the target code stream format is a planar video code stream format.

7. The code stream conversion method according to claim 6, wherein the three-dimensional video code stream comprises a basic code stream and parallax information, and the planar video code stream comprises a basic code stream.

8. The code stream conversion method according to claim 6, wherein the planar video code stream comprises a basic code stream, and the three-dimensional video code stream comprises one or more frames formed by assembling a basic code stream and parallax information.

9. The code stream conversion method according to claim 6, wherein the planar video code stream comprises a basic code stream, and the three-dimensional video code stream comprises a new video frame formed by interlacing a left channel video frame and a right channel video frame.

10. The code stream conversion method according to any one of claims 5 to 9, further comprising:
performing image segmentation on the decoded code stream to obtain an video object; and
assigning different video objects obtained through the segmentation with different depth information.
